(19) Europäisches Patentamt
European Patent Office
Office européen des brevets

(11) Numéro de publication: **0 284 504 B1**

(12) **FASCICULE DE BREVET EUROPEEN**

(45) Date de publication de fascicule du brevet: **17.06.92**

(51) Int. Cl.$^5$: **C22B 3/00**, C22B 59/00, C01F 17/00

(21) Numéro de dépôt: **88400646.1**

(22) Date de dépôt: **18.03.88**

(54) **Procédé de séparation des terres rares par extraction liquide-liquide.**

(30) Priorité: **23.03.87 FR 8703959**

(43) Date de publication de la demande:
**28.09.88 Bulletin 88/39**

(45) Mention de la délivrance du brevet:
**17.06.92 Bulletin 92/25**

(84) Etats contractants désignés:
**AT BE CH DE FR GB IT LI LU NL SE**

(56) Documents cités:
**EP-A- 0 156 735**

**CHEMICAL ABSTRACTS, vol. 71, 1969, page 323, résumé no. 85123f, Columbus, Ohio, US; A.V. NIKOLAEV et al.: "Extraction of some actinides from nitrate and sulfate solutions by methylbis(alkoxymethyl)phosphine oxides", & DOKL. AKAD. NAUK SSSR 1969, 186(3), 603-5**

(73) Titulaire: **RHONE-POULENC CHIMIE**
**25, quai Paul Doumer**
**F-92408 Courbevoie Cédex(FR)**

(72) Inventeur: **Delloye, Thierry**
**91, rue Joseph Coursolle**
**F-77270 Villeparisis(FR)**
Inventeur: **Sabot, Jean-Louis**
**3, avenue Pascal**
**F-78600 Maisons-Laffite(FR)**

(74) Mandataire: **Dutruc-Rosset, Marie-Claude et al**
**RHONE-POULENC INTERSERVICES Service Brevets Chimie 25, Ouai Paul Doumer**
**F-92408 Courbevoie Cédex(FR)**

EP 0 284 504 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

CHEMICAL ABSTRACTS, vol. 79, 1973, page 220, résumé no. 129741c, Columbus, Ohio, US; A.I. MIKHAILICHENKO et al.: "Extraction of rare earth nitrates by neutral organophosphorus extractants", & ZH. NEORG. KHIM. 1973, 18(7), 1907-11

CHEMICAL ABSTRACTS, vol. 83, 1975, page 505, résumé no. 66203p, Columbus, Ohio, US; A.I. MIKHAILICHENKO et al.: "Extraction of rare earth elements by triisoamylphosphine oxide from nitrate solutions", & KOMPLEKSOOBRAZOVANIE EKSTR. AKTINOIDOV LANTANOIDOV 1974, 125-9

CHEMICAL ABSTRACTS, vol. 92, 1980, page 457, résumé no. 153791h, Columbus, Ohio, US; G.V. KORPUSOV et al.: "Study of the extraction of rare earth elements, americium, and curium from nitrate media using tri-1-methylheptylphosphine oxide", & RADIOKHIMIYA 1980, 22(1), 100-6

CHEMICAL ABSTRACTS, vol. 101, 1984, page 250, résumé no. 95135p, Columbus, Ohio, US; A.I. MIKHAILICHENKO et al.: "Extraction of rare earth metals using a mixture of trioctylmethylammonium nitrate and trialkylphosphine oxide", & ISSLED. v OBL. REDK. MET., M. 1983, 41-6

## Description

La présente invention a pour objet un procédé de séparation par solvant, des éléments terres rares contenus dans des solutions aqueuses.

Plus précisément, l'invention a trait à un procédé de séparation par extraction liquide-liquide des terres rares contenues dans des solutions aqueuses de nitrates de ces éléments.

L'expression "terres rares" utilisée conformément à l'invention comprend les éléments de terres rares appelés lanthanides ayant des numéros atomiques de 57 à 71 inclus et l'yttrium de numéro atomique égal à 39.

Dans l'exposé qui suit de la présente invention, on entend par "terres rares cériques", les éléments les plus légers des terres rares commençant avec le lanthane et s'étendant jusqu'au néodyme conformément au numero atomique et l'on désigne par "terres rares yttriques", les éléments les plus lourds des terres rares, commençant avec le samarium et finissant avec le lutécium et comprenant l'yttrium.

Il est bien connu que les terres rares sont difficiles à séparer du fait que les différences de propriétés d'une terre rare par rapport à celles de ses voisines sont extrêmement faibles.

On a élaboré pour la séparation de ces éléments très proches, des procédés qui ont pris une importance particulière dans la séparation des terres rares à savoir les procédés d'extraction liquide-liquide. Ils sont basés sur l'extraction sélective de l'une des terres rares à partir de la solution dans laquelle elles sont contenues à l'aide d'un solvant d'extraction qui est non miscible avec la solution.

A titre de solvants d'extraction, on utilise déjà certains composés organophosphorés en solution dans un diluant organique pour effectuer la séparation des terres rares entre elles. En particulier, il est connu d'utiliser l'oxyde de tri n-octylphosphine dénommé TOPO. Toutefois, le TOPO est sous forme solide à température ambiante et du fait d'une solubilité réduite dans les diluants usuels du type kérosène, son emploi est déconseillé pour certaines applications, en particulier, la séparation des terres rares en milieu nitrate et en solution concentrée.

Le document chem. Abstr., vol.92, 1980, page 457, résumé no. 92 153791h décrit l'utilisation d'un solvant tri (méthyl - 1 héptyl) phosphine pour l'extraction en Milieu nitrate des lanthanides, de l'américium et du curium. Il n'est pas indiqué si ce solvant permet une séparation des lanthanides entre elles.

De plus, certaines séparations, par exemple, l'yttrium des autres terres rares yttriques,sont difficiles à conduire en raison de leur plus grande similitude de propriétés et également du fait que, dans les conditions industrielles d'attaque du minerai de terres rares, l'yttrium est en présence de quantités relativement importantes de terres rares yttriques, quantités évidemment corrélées avec la composition du minerai de terres rares.

La demanderesse a trouvé que les agents d'extraction définis ci-après obviaient aux inconvénients précités et présentaient une très bonne sélectivité vis-à-vis de l'ensemble des terres rares.

La présente invention concerne un procédé de séparation de terres rares contenues dans une solution aqueuse renfermant au moins deux de ces terres rares par extraction liquide-liquide entre une phase aqueuse contenant les nitrates de terres rares à séparer et une phase organique contenant un agent d'extraction constitué par un composé organophosphoré caractérisé par le fait que ledit agent d'extraction est constitué par au moins deux composés organophosphorés différents répondant respectivement aux formules (I) et (I') :

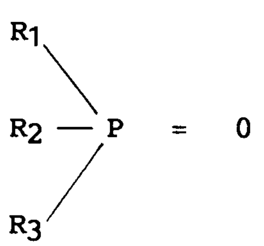
(I)

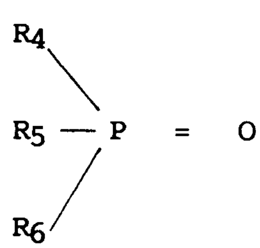
(I')

dans lesdites formules :

- dans la formule (I) :
  . $R_1$, $R_2$, $R_3$ identiques ou différents, éventuellement substitués représentent un atome d'hydrogène ou un radical hydrocarboné linéaire ou ramifié, saturé ou insaturé ou un radical hydrocarboné cyclique, saturé ou insaturé ;
  . la somme des nombres d'atomes de carbone des radicaux $R_1$, $R_2$, $R_3$ étant au moins égale à 12

atomes de carbone.

- dans la formule (I′) :
  . $R_4$, $R_5$, $R_6$ identiques ou différents, éventuellement substitués représentent un atome d'hydrogène ou un radical hydrocarboné linéaire ou ramifié, saturé ou insaturé ou un radical hydrocarboné cyclique, saturé ou insaturé.
- la somme des nombres d'atomes de carbone des radicaux $R_4$, $R_5$, $R_6$ étant au moins égale à 12 atomes de carbone.

On précisera que les radicaux $R_1$, $R_2$, $R_3$, $R_4$, $R_5$, $R_6$ peuvent être porteurs de groupements substituants, tels que, par example, des groupes hydroxy ou nitro : des atomes d'halogène notamment le chlore et le fluor ; des radicaux alcoxy inférieurs ayant une faible condensation en carbone par exemple 1 à 4 atomes ; des groupes cyano, etc...

Les radicaux $R_1$, $R_2$, $R_3$, $R_4$, $R_5$, $R_6$ possèdent un nombre d'atomes de carbone qui varie généralement entre 1 et 18 atomes de carbone et de préférence entre 2 et 8 atomes de carbone.

Ils sont choisis de telle sorte que la somme des nombres d'atomes de carbone des radicaux $R_1$, $R_2$, et $R_3$ ou $R_4$, $R_5$ et $R_6$, soit au moins égale à 12 atomes de carbone et de préférence supérieure à 18.

A titre d'exemples de radicaux $R_1$, $R_2$, $R_3$, $R_4$, $R_5$, $R_6$, on peut citer les radicaux méthyle, éthyle, n-propyle, isopropyle, butyle, isobutyle, sec-butyle, tert-butyle, n-pentyle, méthyl-1 butyle, isopentyle, tert-pentyle, néo-pentyle, les radicaux alkyle normaux suivants : n-hexyle, n-heptyle, n-octyle, n-nonyle, n-decyle, n-undécyle, n-dodécyle, n-tridécyle, n-tétradécyle, n-pentadécyle, n-hexadécyle, n-heptadécyle, n-octadécyle, ainsi que les radicaux alkyle ramifiés correspondants et les radicaux cycloalkyle en particulier le radical cyclohexyle.

Convient particulièrement bien à la mise en oeuvre de l'invention, un mélange de deux agents d'extraction, l'un des agents d'extraction répondant à la formule (I) dans laquelle $R_1$, $R_2$, $R_3$ sont des radicaux alkyle linéaires identiques, c'est-à-dire que les radicaux $R_1$, $R_2$, $R_3$ sont des radicaux alkyle linéaires ayant la même condensation en carbone, l'autre répondant à la formule (I′) dans laquelle $R_4$, $R_5$, $R_6$ sont des radicaux alkyle linéaires identiques, c'est-à-dire que les radicaux $R_4$, $R_5$, $R_6$ sont des radicaux alkyle linéaires ayant la même condensation en carbone, mais ceux-ci presentant une condensation en carbone différente des radicaux $R_1$, $R_2$, $R_3$.

A l'agent d'extraction de formule (I) dans laquelle $R_1$, $R_2$, $R_3$ sont des radicaux alkyle linéaires identiques peut être associé un agent d'extraction de formule (I′) dans laquelle :

- $R_4$, $R_5$, $R_6$ sont des radicaux alkyle ramifiés identiques, c'est-à-dire que les radicaux $R_4$, $R_5$, $R_6$ sont des radicaux alkyle ramifiés ayant la même condensation en carbone,
- $R_4$, $R_5$, $R_6$ sont des radicaux alkyle ramifiés différents c'est-à-dire au moins l'un des radicaux est différent des deux autres,
- $R_4$, $R_5$, $R_6$ sont des radicaux alkyle linéaires et ramifiés, c'est-à-dire qu'il y a presence simultanément d'au moins un radical alkyle linéaire et d'au moins un radical alkyle ramifié.

La proportion des deux composés organophosphorés de formule (I) et (I′) est déterminée de telle sorte que l'on ait un mélange d'oxydes de phosphine qui soit liquide à température ambiante. Le mélange obtenu est miscible aux diluants classiques en toutes proportions.

Comme exemples de mélange d'oxydes de phosphine préférés selon l'invention, on fait appel à un mélange d'oxyde de tri(n-hexyl)phosphine et d'oxyde de tri(n-octyl)phosphine, en particulier le CYANEX 923 commercialisé par la Société AMERICAN CYANAMID.

Un autre agent d'extraction préféré est le CYANEX 925 qui est un mélange constitué de 85 % d'oxyde de bis(triméthyl-2,4,4 pentyl)n-octylphosphine et de 15 % de tri(triméthyl-2,4,4 pentyl)phosphine.

La demanderesse a trouvé que lesdits agents d'extraction présentent une très bonne sélectivité vis-à-vis de l'ensemble des terres rares et en particulier de l'yttrium et des terres rares yttriques, notamment du gadolinium au lutécium, contrairement aux agents d'extraction organophosphorés neutres plus classiques tel que, par exemple, le phosphate de tributyle.

Une application bien adaptée du procédé de l'invention est un procédé de séparation de l'yttrium des autres terres rares yttriques : l'yttrium pouvant représenter de 5 à 80 % du poids total des terres rares yttriques : le pourcentage étant exprimé en poids d'oxyde d'yttrium par rapport au poids des oxydes de terres rares yttriques, l'yttrium inclus.

Un autre intérêt desdits agents d'extraction est qu'ils permettent d'opérer en présence de phases aqueuses très concentrées en nitrates de terres rares (plus de 300 g/l) et d'obtenir des phases organiques très concentrées, plus de 50 g jusqu'à 100 g/l et plus de terres rares exprimées en oxydes.

Conformément au procédé de l'invention, la phase aqueuse que l'on met en contact avec l'agent d'extraction peut être constituée par une solution aqueuse provenant de la redissolution par l'acide nitrique, des hydroxydes obtenus à la suite de l'attaque sodique des minerais contenant les terres rares tels que la

monazite, la bastnaésite et le xénotime. On peut également mettre en oeuvre toute autre solution de sel de terres rares après changement de l'anion présent en anion nitrate.

Le procédé de l'invention s'applique aux solutions telles quelles ou bien après leur avoir fait subir une concentration préalable.

Généralement, on met en oeuvre le procédé d'extraction liquide-liquide sur des solutions aqueuses de nitrates de terres rares ayant une concentration exprimée en oxydes de terres rares variant entre 20 g/l et 500 g/l : les bornes données ne présentant aucun caractère critique. D'une manière préférentielle, elles ont une concentration comprise entre 100 g/l et 500 g/l.

Elles présentent une acidité variant généralement entre 0,01 N et 3,0 N.

La phase organique selon le procédé de l'invention contient éventuellement, outre l'agent d'extraction, un diluant organique. Comme diluants susceptibles d'être utilisés, on peut mettre en oeuvre ceux habituellement mis en oeuvre pour réaliser des opérations d'extraction liquide-liquide. Parmi ceux-ci, on peut citer les hydrocarbures aliphatiques ou cycloaliphatiques comme, par exemple, l'hexane, l'heptane, le dodécane, le cyclohexane, l'isoparaffine et les coupes pétrolières du type kérosène ou isoparaffine; les hydrocarbures aromatiques comme, par exemple, le benzène, le toluène, l'éthylbenzène, le xylène, les coupes pétrolières constituées de mélange d'alkylbenzènes notamment les coupes du type SOLVESSO (marque déposée par la Société EXXON) et les hydrocarbures halogénés tels que le chloroforme, le tétrachlorure de carbone, le dichloro-1,2 éthylène, le monochlorobenzène.

On peut également utiliser un mélange de ces diluants.

D'une manière préférentielle, on choisit un hydrocarbure aliphatique.

Le pouvoir d'extraction de la solution organique vis-à-vis des terres rares, augmente lorsqu'on augmente la concentration de l'agent d'extraction dans la phase organique ; cependant, les facteurs de séparation des éléments entre eux ne sont pas modifiés de façon notable par la concentration de l'agent d'extraction. Ainsi, la concentration de l'agent d'extraction dans la phase organique n'est pas un facteur critique selon l'invention et peut varier dans de larges limites. Elle peut varier de 5 % du volume de la phase organique lorsque l'agent d'extraction est en solution dans un diluant jusqu'à environ 100 % lorsque l'agent d'extraction est utilisé pur.

D'une manière préférentielle, la concentration est choisie entre 50 et 100 % du volume de la phase organique.

La phase organique selon le procédé de l'invention peut également contenir divers agents modifieurs dont l'un des buts essentiels est d'améliorer les propriétés hydrodynamiques du système sans altérer les propriétés extractantes des composés organophosphorés. Parmi les composés convenant bien, on peut citer notamment, les composés à fonction alcool et, en particulier, les alcools lourds dont le nombre d'atomes de carbone est compris entre 4 et 15 et les phénols lourds, ainsi que divers autres composés tels que certains esters phosphoriques comme le tri-butylphosphate. Une proportion comprise entre 3 et 20 % en volume rapportee à la phase organique est généralement favorable.

Dans le choix des conditions d'extraction, la concentration en ions nitrate est importante puisqu'elle peut faciliter l'extraction de la ou des terres rares à extraire dans la phase organique. La concentration en ions nitrate peut varier entre 1 et 10 moles/litre et est choisie, de préférence, entre 2 et 9 moles/litre.

Si nécessaire, on peut accroître la concentration en ions nitrate par addition de ceux-ci apportés, par exemple, à l'aide d'une solution aqueuse d'acide nitrique, d'une solution aqueuse d'un sel sous forme nitrate notamment le nitrate d'ammonium.

Au cours de la phase d'extraction, on met en contact la phase organique et la phase aqueuse à une température qui ne présente aucun caractère critique : elle est choisie généralement entre 10 ° C et 80 ° C et est, le plus souvent, comprise entre 30 ° C et 60 ° C.

Le rapport en débit de la phase organique et de la phase aqueuse est en corrélation avec la concentration de l'agent d'extraction et il est choisi conformément à la concentration des terres rares à extraire dans la phase aqueuse et conformément à l'appareillage utilisé habituellement pour la mise en oeuvre d'un procédé d'extraction liquide-liquide.

Lorsque certaines terres rares ont été extraites dans la phase organique en faibles quantités alors qu'elles auraient dû rester dans la phase aqueuse, il est parfois nécessaire de faire intervenir une étape de lavage après celle d'extraction.

Dans l'étape de lavage, la phase organique est lavée avec de l'eau, de préférence de l'eau désionisée ou à l'aide d'une solution aqueuse contenant des ions nitrate telle qu'une solution aqueuse d'acide nitrique diluée ou une solution aqueuse de nitrates de terres rares de même nature que les terres rares à extraire et qui peuvent être contenues dans la partie de la phase aqueuse obtenue dans l'opération suivante de régénération du solvant d'extraction.

Lorsque le lavage est effectué à l'aide d'une solution d'acide nitrique, sa concentration est choisie

inférieure à 1N et, de préférence, comprise entre $10^{-3}$ et $10^{-1}$N. Lors de l'emploi d'une solution aqueuse de nitrates de terres rares, sa concentration exprimée en oxydes de terres rares peut être comprise entre 5 et 500 g/l, de préférence entre 100 et 500 g/l.

Après les opérations d'extraction et de lavage suivies d'une séparation de la phase aqueuse et de la phase organique, on effectue une étape de régénération du solvant d'extraction.

On sépare la ou les terres rares extraites dans la phase organique par mise en contact de cette dernière avec de l'eau, de préférence désionisée ou avec une solution aqueuse acide telle que, par exemple, une solution aqueuse d'acide nitrique, d'acide sulfurique, d'acide chlorhydrique ou d'acide perchlorique. On utilise de préférence, l'acide nitrique.

La concentration de la solution d'acide est choisie inférieure à 1N et, de préférence, comprise entre $10^{-3}$ et $10^{-1}$N.

La ou les terres rares extraites sont recueillies dans la phase aqueuse tandis que le solvant d'extraction peut être recyclé à l'étape d'extraction. Ce recyclage n'est pas essentiel dans la présente invention mais il est souhaitable pour des raisons économiques.

On définit, ci-après, un schéma permettant de séparer conformément au procédé de l'invention qui vient d'être exposé, au moins deux terres rares jusqu'à n terres rares.

Dans le cas de la séparation de deux terres rares symbolisées par $TR_1$ et $TR_2$, on définit le facteur de séparation entre ces terres rares comme étant une relation entre les coefficients de partage de $TR_1$ et $TR_2$

$$F = \frac{P_{TR1}}{P_{TR2}}$$

Le coefficient de partage est égal au rapport entre la concentration de $TR_1$ (ou $TR_2$) dans la phase organique et la concentration de $TR_1$ (ou $TR_2$) dans la phase aqueuse.

Pour que la séparation entre $TR_1$ et $TR_2$ soit possible, F doit être différent de 1.

Si $TR_1$ est la terre rare qui possède le coefficient de partage le plus élevé, dans ce cas, F est supérieur à 1.

Selon l'invention, on procédé à la séparation d'au moins deux terres rares $TR_1$ et $TR_2$ par extraction liquide-liquide entre une phase aqueuse contenant au moins les nitrates de ces terres rares et une phase orqanique contenant ledit agent d'extraction en procédant de la manière qui suit :

- dans une première étape, on réalise la séparation entre $TR_1$ et $TR_2$ par extraction de $TR_1$ dans la phase organique ; $TR_2$ restant essentiellement en phase aqueuse
- dans une deuxième étape, on effectue le lavage sélectif de la phase organique contenant $TR_1$ et une faible quantité de $TR_2$ à l'aide d'une solution aqueuse contenant des ions nitrate permettant d'éliminer $TR_2$ de la phase organique par passage dans la phase aqueuse
- on sépare ensuite la phase organique de la phase aqueuse
- dans une troisième étape, on effectue la régénération du solvant d'extraction par mise en contact de la phase organique avec une solution aqueuse acide.

Les conditions opératoires de chaque étape ont été précédemment données.

Selon l'invention, on peut séparer un mélange de n terres rares en deux sous-groupes en assimilant chaque sous-groupe à $TR_1$ et $TR_2$.

Si l'on a un mélange de n terres rares à séparer individuellement, on répétera la succession des trois étapes qui viennent d'être définies, (n - 1) fois afin de séparer toutes les terres rares entre elles.

La réalisation pratique de l'invention peut être effectuée selon la technique classique contre-courant telle qu'exposée ci-dessus mais aussi par les techniques de co-courants et de courants croisés bien connues de l'homme de l'art.

Les diverses étapes de mises en contact peuvent être réalisées notamment dans des dispositifs classiques d'extraction liquide-liquide fonctionnant à contre-courant. De tels dispositifs comprennent généralement plusieurs étages de systèmes mélangeurs-décanteurs ou de colonnes garnies et/ou agitées, agencés pour réaliser des opérations d'extraction, de lavage sélectif et de récupération des éléments terres rares en phase aqueuse et de régénération du solvant d'extraction.

Les exemples suivants sont donnés à titre indicatif et ne peuvent être considérés comme une limite du domaine et de l'esprit de l'invention.

Dans les exemples, les pourcentages donnés sont exprimés en poids sauf indication contraire.

EXEMPLE 1

Facteur de séparation de l'yttrium vis-à-vis d'un lanthanide en milieu nitrate à l'aide d'un mélange d'oxydes de phosphine, liquide, dans un hydrocarbure aromatique (SOLVESSO 150).

Le mélange de terres rares est une solution de nitrates de terres rares ayant une concentration exprimée en oxydes de terres rares de 500 g/l répartis de la façon suivante :

- terres rares cériques :

$La_2O_3$ = 23,0 %
$CeO_2$ = 46,5 %
$Pr_6O_{11}$ = 5,1 %
$Nd_2O_3$ = 18,4 %

- terres rares yttriques :

$Sm_2O_3$ = 2,3 %
$Eu_2O_3$ = 0,07 %
$Gd_2O_3$ = 1,7 %
$Tb_4O_7$ = 0,16 %
$Dy_2O_3$ = 0,52 %
$Ho_2O_3$ = 0,09 %
$Er_2O_3$ = 0,13 %
$Tm_2O_3$ = 0,013 %
$Yb_2O_3$ = 0,061 %
$Lu_2O_3$ = 0,006 %
$Y_2O_3$ = 2,0 %

On met en oeuvre comme agent d'extraction un mélange d'oxydes de trialkylphosphine constitué de 60 % d'oxyde de tri(n-hexyl)phosphine et de 40 % d'oxyde de tri(n-octyl)phosphine commercialisé par la Société American Cyanamid sous la marque CYANEX 923.

Ledit agent d'extraction est mis en solution dans un hydrocarbure aromatique, coupe pétrolière SOLVESSO 150, composé d'un mélange d'alkylbenzène en particulier de diméthyléthylbenzene et de tétraméthylbenzène à raison de 1 mole/litre et le mélange obtenu est le solvant d'extraction.

On met en contact la phase aqueuse constituée par la solution de nitrates de terres rares et la phase organique constituée par le solvant d'extraction : le rapport des volumes des phases étant égal à l'unité.

L'extraction est réalisée à température ambiante.

Ceci permet de déterminer les facteurs de séparation $F_{Ln/y}$ pour les couples lanthanide (Ln)/Yttrium qui sont consignés dans le tableau suivant :

| Ln / Agent d'extraction | La | Ce | Pr | Nd | Sm | Eu | Gd | Tb | Dy | Ho | Er | Tm | Yb | Lu |
|---|---|---|---|---|---|---|---|---|---|---|---|---|---|---|
| Mélange d'oxyde de trialkylphosphine (CYANEX 923) | 0,02 | 0,09 | 0,12 | 0,18 | 0,59 | 0,48 | 0,48 | 0,75 | 1,00 | 1,16 | 1,41 | 2,94 | 2,90 | 2,28 |

Les valeurs des facteurs de séparation données ci-dessus permettent de calculer les conditions à mettre en oeuvre pour séparer l'yttrium des autres terres rares selon les techniques classiques d'extraction liquide-liquide.

On constate que le mélange d'oxydes de phosphine précités présente vis-à-vis de l'yttrium une très bonne sélectivité pour les terres rares yttriques, les plus lourdes.

EXEMPLE 2

Facteur de séparation de l'yttrium vis-à-vis d'un lanthanide en milieu nitrate à l'aide d'un mélange d'oxydes de phosphine, liquide, dans un hydrocarbure aliphatique (kérosène).

Le même agent d'extraction que celui mentionné dans l'exemple 1 est mis en solution dans le kérosène, à raison de 75 % en volume et le mélange obtenu est le solvant d'extraction.

On met en contact à 50 °C la phase aqueuse constituée par la solution de nitrates de terres rares définie dans l'exemple 1 et le phase organique constituée par le solvant d'extraction : le rapport des volumes de phases étant égal à l'unité.

Le tableau suivant donne les facteurs de séparation $F_{Ln/y}$ des couples lanthanide (Ln)/yttrium ainsi que la charge du solvant d'extraction, à l'equilibre, exprimée en g d'oxyde de terre rare par litre.

| Ln / Agent d'extraction | Nd | Sm | Eu | Gd | Tb | Dy | Ho | Er | Tm | Yb | Lu | charge du solvant g/l |
|---|---|---|---|---|---|---|---|---|---|---|---|---|
| Mélange d'oxyde de trialkyl phosphine (CYANEX 923) | 0,35 | 0,54 | 0,73 | 0,67 | 0,94 | 1,12 | 1,31 | 1,71 | 3,1 | 1,71 | 1,93 | 98,8 |

On remarque que le mélange d'oxydes de phosphine défini selon l'invention est bien adapté à une séparation yttrium/terres rares yttriques, les plus lourdes.

EXEMPLE 3

Procédé de séparation de l'yttrium d'un mélange contenant des nitrates de thulium, ytterbium et lutécium.

On réalise cet exemple en suivant le mode de mise en oeuvre illustré par la figure 1.

L'appareillage utilisé pour la séparation desdites terres rares comprend :

- une première batterie d'extraction liquide-liquide à plusieurs étages du type mélangeur-décanteur, fonctionnant à contre-courant et constituée d'une section d'extraction (a) comportant 36 étages théoriques et d'une section de lavage (a') comportant 14 étages théoriques,
- une section de régénération-récupération du solvant d'extraction (b) comportant 10 étages théoriques.

Le mélange initial de terres rares à séparer est une solution de nitrates de terres rares présentant une acidité 0,1 N et une concentration exprimée en oxydes de terres rares de 270 g/l répartis de la façon suivante :

- oxyde d'yttrium = 95,0 %
- oxyde de thulium = 0,8 %
- oxyde d'ytterbium = 3,8 %
- oxyde de lutécium = 0,4 %

L'agent d'extraction utilisé est le mélange d'oxydes de trialkylphosphine (CYANEX 923) de l'exemple 1.

Ledit agent d'extraction est mis en solution dans le kérosène, à raison de 75 % en volume et le mélange obtenu sera appelé solvant d'extraction.

Avant de détailler les différentes opérations, on précisera que l'on choisit comme entrée et sortie des unités d'extraction-lavage et de régénération-récupération, le sens de circulation de la phase organique.

On réalise la succession des étapes suivantes :

- on introduit en sortie de l'unité d'extraction (a) en (1), la solution de nitrates de terres rares à séparer avec un débit de 161 l/h ;
- on introduit en entrée de l'unité d'extraction (a) en (2), le solvant d'extraction à un débit de 2135 l/h ;
- on introduit en (5), en sortie de la section de contre-extraction (b) et à contre-courant de la phase organique, de l'eau désionisée à un débit de 1060 l/h ;
- on recueille à l'entrée de la section de contre-extraction (b) en (6), une solution aqueuse de nitrates de terres rares que l'on concentre par évaporation jusqu'à une concentration exprimée en oxydes de terres rares de 450 g/l ayant la répartition suivante : 8,0 % de $Y_2O_3$, 15,0 % de $Tm_2O_3$, 70 % de $Yb_2O_3$ et 7,0 % de $Lu_2O_3$. On en prélève 5 l/h qui constitue la production et le reste, 550 l/h, alimente en (3) l'unité de lavage (a') pour réaliser le reflux ;
- on recueille à l'entrée de l'unité de lavage (a) en (4), à un débit de 711 l/h une solution aqueuse de

nitrate d'yttrium trés pure, ayant une concentration exprimée en $Y_2O_3$ de 59 g/l et contenant moins de $10^{-4}$ % des autres terres rares exprimées en oxydes ;

- on récupère à la sortie de la section régénération-récupération (b) en (7), le solvant d'extraction purifié qui peut être recyclé en (2) dans l'unité d'extraction (a) avec le même débit : toutefois, ce recyclage n'est pas essentiel dans la presente invention mais il est souhaitable pour des raisons économiques.

Le procédé tel que décrit permet d'obtenir de l'yttrium à partir d'un mélange de terres rares avec un excellent rendement d'extraction puisqu'il est de 99,8 % et d'une très grande pureté puisqu'elle est de 99,9999 %.

## Revendications

**1.** Procédé de séparation de terres rares contenues dans une solution aqueuse renfermant au moins deux de ces terres rares par extraction liquide-liquide entre une phase aqueuse contenant les nitrates de terres rares à séparer et une phase organique contenant un agent d'extraction constitué par un composé organophosphoré caractérisé par le fait que ledit agent d'extraction est constitué par au moins deux composés organophosphorés différents répondant respectivement à la formule (I) et (I') :

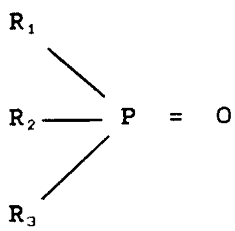 (I)

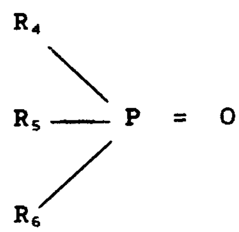 (I')

dans lesdites formules :

- dans la formule (I) :
  . $R_1$, $R_2$, $R_3$ identiques ou différents, éventuellement substitués représentent un atome d'hydrogène ou un radical hydrocarboné linéaire ou ramifié, saturé ou insaturé ou un radical hydrocarboné cyclique, saturé ou insaturé ;
  . la somme des nombres d'atomes de carbone des radicaux $R_1$, $R_2$, $R_3$ étant au moins égale à 12 atomes de carbone.
- dans la formule (I') :
  . $R_4$, $R_5$, $R_6$ identiques ou différents, éventuellement substitués representent un atome d'hydrogène ou un radical hydrocarboné linéaire ou ramifié, saturé ou insaturé ou un radical hydrocarboné cyclique, saturé ou insaturé.
- la somme des nombres d'atomes de carbone des radicaux $R_4$, $R_5$, $R_6$ étant au moins égale à 12 atomes de carbone.

**2.** Procédé selon la revendication 1 caractérisé par le fait que lesdits composés organophosphorés repondent aux formules (I) et (I') dans lesquelles $R_1$, $R_2$, $R_3$, $R_4$, $R_5$, $R_6$ possèdent de 1 à 18 atomes de carbone.

**3.** Procédé selon la revendication 2 caractérisé par le fait que $R_1$, $R_2$, $R_3$, $R_4$, $R_5$, $R_6$ possèdent de 2 à 8 atomes de carbone.

**4.** Procédé selon l'une des revendications 1 à 3 caractérisé par le fait que ledit composé organophosphoré répond à la formule (I) dans laquelle la somme des nombres d'atomes de carbone des radicaux $R_1$, $R_2$, et $R_3$ est au moins égale à 18 atomes de carbone.

**5.** Procédé selon l'une des revendications 1 à 4 caractérisé par le fait que ledit composé organophosphoré répond à la formule (I') dans laquelle la somme des nombres d'atomes de carbone des radicaux $R_4$, $R_5$ et $R_6$ est au moins égale à 18 atomes de carbone.

**6.** Procédé selon d'une des revendications 1 à 5 caractérisé par le fait que l'agent d'extraction est constitué par un composé organophosphoré de formule (I) dans laquelle $R_1$, $R_2$, $R_3$ sont des radicaux alkyle linéaires identiques et un composé organophosphoré de formule (I') dans laquelle $R_4$, $R_5$, $R_6$

sont des radicaux alkyle linéaires identiques ayant une condensation en carbone différente des radicaux $R_1$, $R_2$, $R_3$.

7. Procédé selon l'une des revendications 1 à 5 caractérisé par le fait que l'agent d'extraction est constitué par un composé organophosphoré de formule (I) dans laquelle $R_1$, $R_2$, $R_3$ sont des radicaux alkyle linéaires identiques et un composé organophosphoré de formule (I') dans laquelle $R_4$, $R_5$, $R_6$ sont des radicaux alkyle ramifiés identiques ou des radicaux alkyle ramifiés différents ou des radicaux alkyle linéaires et ramifiés.

8. Procédé selon l'une des revendications 1 à 7 caractérisé par le fait que l'agent d'extraction est un mélange d'oxyde de tri(n-hexyl)phosphine et d'oxyde de tri(n-octyl)phosphine ou un mélange d'oxyde de bis(triméthyl-2,4,4 pentyl)n-octylphosphine et de tri(triméthyl-2,4,4 pentyl)phosphine.

9. Procédé selon l'une des revendications 1 à 8 caractérisé par le fait que la solution aqueuse de nitrate de terres rares présente une concentration exprimée en oxydes de terres rares comprise entre 20 g/l et 500 g/l.

10. Procédé selon la revendication 9 caractérisé par le fait que la concentration en nitrates de terres rares est comprise entre 100 g/l et 500 g/l.

11. Procédé selon l'une des revendications 9 et 10 caractérisé par le fait que la solution aqueuse de nitrates de terres rares présente une acidité comprise entre 0,01 N et 3,0 N.

12. Procédé selon l'une des revendications 1 à 11 caractérisé par le fait que la phase organique comporte en outre au moins un diluant organique choisi parmi le groupe constitué par les hydrocarbures aliphatiques ou cycloaliphatiques, les coupes pétrolières du type kérosène ou isoparaffine, les hydrocarbures aromatiques, les coupes pétrolières constituées de mélanges d'alkylbenzènes, les hydrocarbures halogénés.

13. Procédé selon la revendication 1 caractérisé par le fait que la concentration dudit agent d'extraction dans le phase organique est comprise entre 5 et 100 % du volume de la phase organique.

14. Procédé selon la revendication 13 caractérisé par le fait que la concentration dudit agent d'extraction est comprise entre 50 et 100%.

15. Procédé selon l'une des revendications 1 à 14 caractérisé par le fait que la phase organique comporte en outre au moins un agent modifieur choisi parmi le groupe constitué par les composés à fonction alcool, les esters phosphoriques.

16. Procédé selon la revendication 15 caractérisé par le fait que la concentration de l'agent modifieur dans la phase organique est comprise entre 3 et 20 % du volume de la phase organique.

17. Procédé selon l'une des revendications 1 à 16 caractérisé par le fait que la concentration en ions nitrate de la phase aqueuse au cours de l'extraction peut varier entre 1 et 10 moles/litre.

18. Procédé selon la revendication 17 caractérisé par le fait que la concentration en ions nitrate est comprise entre 2 et 9 moles/litre.

19. Procédé selon l'une des revendications 1 à 18 caractérisé par le fait que la température d'extraction se situe entre 10 °C et 80 °C.

20. Procédé selon l'une des revendications 1 à 19 caractérisé par le fait que l'on procédé après l'étape d'extraction, à une opération de lavage de la phase organique avec de l'eau ou à l'aide d'une solution aqueuse contenant des ions nitrates.

21. Procédé selon la revendication 20 caractérisé par le fait que la solution de lavage est une solution aqueuse d'acide nitrique ayant une concentration inférieure à 1N.

**22.** Procédé selon la revendication 21 caractérisé par le fait que la concentration de la solution aqueuse d'acide nitrique est comprise entre $10^{-3}$ et $10^{-1}$N.

**23.** Procédé selon la revendication 20 caractérisé par le fait que la solution de lavage est une solution aqueuse de nitrates de terres rares dont la concentration exprimée en oxydes de terres rares est comprise entre 5 et 500 g/l.

**24.** Procédé selon la revendication 23 caractérisé par le fait que la concentration de la solution aqueuse de nitrates de terres rares est comprise entre 100 et 500 g/l.

**25.** Procédé selon l'une des revendications 1 à 24 caractérisé par le fait que l'on procède après les etapes d'extraction et de lavage successives suivies par une séparation de la phase aqueuse et de la phase organique à une étape de régénération du solvant d'extraction par mise en contact de la phase organique avec de l'eau ou avec une solution aqueuse acide.

**26.** Procédé selon la revendication 25 caractérisé par le fait que la solution aqueuse acide est une solution aqueuse d'acide nitrique, d'acide sulfurique, d'acide chlorhydrique, d'acide perchlorique.

**27.** Procédé selon la revendication 26 caractérisé par le fait que la solution aqueuse acide est une solution d'acide nitrique.

**28.** Procédé selon l'une des revendications 26 et 27 caractérisé par le fait que la concentration de la solution aqueuse acide est inférieure à 1N.

**29.** Procédé selon la revendication 28 caractérisé par le fait que la concentration de la solution aqueuse acide est comprise entre $10^{-3}$ et $10^{-1}$N.

**30.** Procédé selon l'une des revendications 1 à 29 caractérisé par le fait que dans une première étape, dans le but de séparer au moins deux terres rares ou deux sous-groupes de terres rares, on met en contact la solution aqueuse de nitrates de terres rares avec une phase organique constituée d'un diluant et dudit agent d'extraction de façon à extraire dans la phase organique la terre rare ou le sous-groupe de terres rares possédant le coefficient de partage le plus élevé : l'autre terre rare ou le sous-groupe de terres restant essentiellement en phase aqueuse ; dans une deuxième étape, on effectue le lavage sélectif de la phase organique à l'aide d'une solution aqueuse contenant des ions nitrate afin d'éliminer la faible quantité de la terre rare ou du sous-groupe de terres rares les moins extraites dans la phase organique par passage en phase aqueuse ; on sépare ensuite la phase organique de la phase aqueuse ; dans une troisième étape, on effectue la régénération du solvant d'extraction par mise en contact de la phase organique avec de l'eau ou avec une solution aqueuse acide.

**31.** Procédé selon la revendication 30 caractérisé par le fait que l'on sépare l'yttrium des terres rares yttriques.

**32.** Procédé selon la revendication 31 caractérisé par le fait que l'yttrium exprimé en oxyde représente de 5 à 80 % du poids total des terres rares yttriques à séparer exprimées en oxydes.

## Claims

**1.** A process for separating rare-earths contained in an aqueous solution containing at least two rare-earths by liquid-liquid extraction between an aqueous phase containing nitrates of rare-earths to be separated and an organic phase containing an extraction agent constituted by an organophosphorus compound, characterized by the fact that the said extraction agent is constituted by at least two different organophosphorus compounds corresponding respectively to the Formulae (I) and (I'):

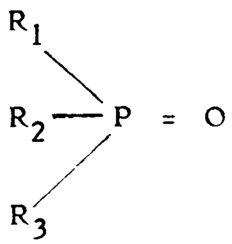 (I) 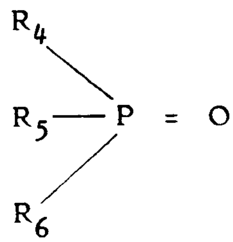 (I')

in which formulae, in Formula (I), $R_1$, $R_2$ and $R_3$, which are identical or different, represent a hydrogen atom or straight chain or branched hydrocarbon radical, which may be saturated or unsaturated and may be substituted or unsubstituted, or a cyclic hydrocarbon radical, which may be saturated or unsaturated, substituted or unsubstituted; the sum of the number of carbon atoms of the radicals $R_1$, $R_2$ and $R_3$ is at least equal to 12 carbon atoms; in Formula (I') $R_4$, $R_5$ and $R_6$, which are identical or different, represent a hydrogen atom or a straight chain or branched hydrocarbon radical, which may be saturated or unsaturated and may be substituted or unsubstituted, or a cyclic hydrocarbon radical, which may be saturated or unsaturated, substituted or unsubstituted; the sum of the number of carbon atoms of the radicals $R_4$, $R_5$ and $R_6$ is at least equal to 12 carbon atoms.

**2.** A process according to Claim 1 characterized by the fact that the said organophosphorus compounds correspond to Formula (I) and (I') in which $R_1$, $R_2$, $R_3$, $R_4$, $R_5$ and $R_6$ possess 1 to 18 carbon atoms.

**3.** A process according to Claim 2 characterized by the fact that $R_1$, $R_2$, $R_3$, $R_4$, $R_5$ and $R_6$ possess 2 to 8 carbon atoms.

**4.** A process according to one of Claims 1 to 3 characterized by the fact that the said organophosphorus compound corresponds to Formula (1) in which the sum of the number of carbon atoms of the radicals $R_1$, $R_2$ and $R_3$ is at least equal to 18 carbon atoms.

**5.** A process according to one of Claims 1 to 4 characterized by the fact that the said organophosphorus compounds correspond to Formula (I') in which the sum of the number of carbon atoms of the radicals $R_4$, $R_5$ and $R_6$ is at least equal to 18 carbon atoms.

**6.** A process according to one of Claims 1 to 5 characterized by the fact that the extraction agent is made up of an organophosphorus compound of Formula (I) in which $R_1$, $R_2$ and $R_3$ are identical linear alkyl radicals and an organophosphorus compound of Formula (I') in which $R_4$, $R_5$ and $R_6$ are identical linear alkyl radicals having a carbon content different from radicals $R_1$, $R_2$ and $R_3$.

**7.** A process according to one of Claims 1 to 5 characterized by the fact that the extraction agent is made up of an organophosphorus compound of Formula (I) in which $R_1$, $R_2$ and $R_3$ are identical linear alkyl radicals and an organophosphorus compound of Formula (I') in which $R_4$, $R_5$ and $R_6$ are identical branched alkyl radicals or different branched alkyl radicals or linear and branched alkyl radicals.

**8.** A process according to one of Claims 1 to 7 characterized by the fact that the extraction agent is a mixture of tri(n-hexyl)phosphine oxide and tri(n-octyl)phosphine oxide or a mixture of bis(2,4,4-trimethylpentyl) n-octylphospine oxide and tri(2,4,4-trimethylpentyl)phosphine oxide.

**9.** A process according to one of Claims 1 to 8 characterized by the fact that the aqueous solution of rare-earth nitrates has a concentration, expressed in rare-earth oxides, between 20 and 500 g/l.

**10.** A process according to Claim 9 characterized by the fact that the concentration of rare-earth nitrates is between 100 and 500 g/l.

**11.** A process according to one of Claims 9 and 10 characterized by the fact that the aqueous solution of rare-earth nitrates has an acidity between 0.01 N and 3.0 N.

**12.** A process according to one of Claims 1 to 11 characterized by the fact that the organic phase

comprises, inter alia, at least one organic diluent chosen from the group made up of aliphatic or cycloaliphatic hydrocarbons, petroleum cuts of the kerosene or isoparaffin type, aromatic hydrocarbons, petroleum cuts made up of mixtures of alkylbenzenes, and halogenated hydrocarbons.

**13.** A process according to Claim 1 characterized by the fact that the concentration of the said extraction agent in the organic phase is between 5 and 100 % of the volume of the organic phase.

**14.** A process according to Claim 13 characterized by the fact that the concentration of the said extraction agent is between 50 and 100 %.

**15.** A process according to one of Claims 1 to 14 characterized by the fact that the organic phase comprises inter alia at least one modifying agent chosen from the group made up of compounds with an alcohol function and phosphoric esters.

**16.** A process according to Claim 15 characterized by the fact that the concentration of the modifying agent in the organic phase is between 3 and 20% of the volume of the organic phase.

**17.** A process according to one of Claims 1 to 16 characterized by the fact that the concentration of nitrate ions in the aqueous phase during the course of the extraction can vary between 1 and 10 moles/litre.

**18.** A process according to Claim 17 characterized by the fact that the concentration of nitrate ions is between 2 and 9 moles/litre.

**19.** A process according to one of Claims 1 to 18 characterized by the fact that the extraction temperature is between 10 and 80 ° C.

**20.** A process according to one of Claims 1 to 19 characterized by the fact that, after the extraction step, a washing operation on the organic phase is carried out with water or by means of an aqueous solution containing nitrate ions.

**21.** A process according to Claim 20 characterized by the fact that the washing solution is an aqueous solution of nitric acid having a concentration less than 1 N.

**22.** A process according to Claim 21 characterized by the fact that the concentration of the aqueous solution of nitric acid is between 0.001 N and 0.1 N.

**23.** A process according to Claim 20 characterized by the fact that the washing solution is an aqueous solution of rare-earth nitrates of which the concentration, expressed in rare-earth oxides, is between 5 and 500 g/l.

**24.** A process according to Claim 23 characterized by the fact that the concentration of the aqueous solution of rare-earth nitrates is between 100 and 500 g/l.

**25.** A process according to one of Claims 1 to 24 characterized by the fact that, after the successive steps of extraction and washing, followed by separation of the aqueous phase and the organic phase, a step of regeneration of the extraction solvent is carried out by bringing the organic phase into contact with water or with an aqueous acidic solution.

**26.** A process according to Claim 25 characterized by the fact that the aqueous acidic solution is an aqueous solution of nitric acid, sulphuric acid, hydrochloric acid or perchloric acid.

**27.** A process according to Claim 26 characterized by the fact that the aqueous acidic solution is a solution of nitric acid.

**28.** A process according to one of Claims 26 and 27 characterized by the fact that the concentration of the aqueous acidic solution is less than 1 N.

**29.** A process according to Claim 28 characterized by the fact that the concentration of the aqueous acidic

solution is between 0.001 N and 0.1N.

**30.** A process according to one of Claims 1 to 29 characterized by the fact that, in a first step, with the aim of separating at least two rare-earths or two sub-groups of rare-earths, the aqueous solution of rare-earth nitrates is brought into contact with an organic phase comprising a diluent and the said extraction agent in a manner so as to extract into the organic phase the rare-earth or the sub-group of rare-earths possessing the higher partition coefficient; the other rare-earth or the other sub-group of rare-earths remaining essentially in the aqueous phase; in a second step, selective washing of the organic phase is effected by means of an aqueous solution containing nitrate ions in order to eliminate the small quantity of rare-earth or sub-group of rare-earths the less extracted in the organic phase by passage into an aqueous phase; the organic phase and the aqueous phase are then separated; and in a third step, the extraction solvent is regenerated by contact of the organic phase with water or with an aqueous acidic solution.

**31.** A process according to Claim 30 characterized by the fact that yttrium is separated from yttric rare-earths.

**32.** A process according to Claim 31 characterized by the fact that the yttrium, expressed as oxide, represents 5 to 80% by weight of the total of yttric rare-earths to be separated, expressed as oxides.

**Patentansprüche**

**1.** Verfahren zum Auftrennen von Seltenen Erden, die in einer wäßrigen Lösung enthalten sind, welche mindestens zwei dieser Seltenen Erden enthält, mittels flüssig/flüssig-Extraktion zwischen einer wäßrigen Phase, die die Nitrate der Seltenen Erden, die getrennt werden sollen, enthält und einer organischen Phase, die ein Extraktionsmittel enthält, welches aus einer Organophosphor-Verbindung besteht, dadurch gekennzeichnet, daß das Extraktionsmittel aus mindestens zwei verschiedenen Organophosphor-Verbindungen besteht, die der Formel (I) bzw. (I')

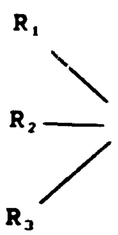 (I) 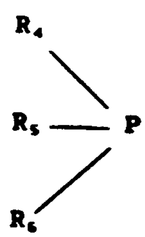 (I')

entsprechen, in denen:

- in der Formel (I):
  . $R_1$, $R_2$ und $R_3$ gleich oder verschieden und gegebenenfalls substituiert sind und jeweils für ein Wasserstoffatom oder für eine lineare oder verzweigte, gesättigte oder ungesättigte Kohlenwasserstoffgruppe oder eine gesättigte oder ungesättigte cyclische Kohlenwasserstoffgruppe stehen;
  . die Summe der Anzahl Kohlenstoffatome in den Gruppen $R_1$, $R_2$ und $R_3$ mindestens 12 Kohlenstoffatome ausmacht;
- in der Formel (I'):
  . $R_4$, $R_5$ und $R_6$ gleich oder verschieden und gegebenenfalls substituiert sind und jeweils für ein Wasserstoffatom oder für eine lineare oder verzweigte, gesättigte oder ungesättigte Kohlenaswasserstoffgruppe oder eine gesättigte oder ungesättigte cyclische Kohlenwasserstoffgruppe stehen;
  . die Summe der Anzahl Kohlenstoffatome in den Gruppen $R_4$, $R_5$ und $R_6$ mindestens 12 Kohlenstoffatome ausmacht.

**2.** Verfahren nach Anspruch 1, dadurch gekennzeichnet, daß die Organophosphor-Verbindungen den Formeln (I) und (I') entsprechen, in denen $R_1$, $R_2$, $R_3$, $R_4$, $R_5$ und $R_6$ (jeweils) 1 bis 18 Kohlenstoffatome enthalten.

**3.** Verfahren nach Anspruch 2, dadurch gekennzeichnet, daß $R_1$, $R_2$, $R_3$, $R_4$, $R_5$ und $R_6$ (jeweils) 2 bis 8 Kohlenstoffatome enthalten.

**4.** Verfahren nach einem der Ansprüche 1 bis 3, dadurch gekennzeichnet, daß die Organophosphor-Verbindung der Formel (I) entspricht, in der die Summe der Anzahl Kohlenstoffatome der Gruppen $R_1$, $R_2$ und $R_3$ mindestens 18 Kohlenstoffatome ausmacht.

**5.** Verfahren nach einem der Ansprüche 1 bis 4, dadurch gekennzeichnet, daß die Organophosphor-Verbindung der Formel (I') entspricht, in der die Summe der Anzahl Kohlenstoffatome der Gruppen $R_4$, $R_5$ und $R_6$ mindestens 18 Kohlenstoffatome ausmacht.

**6.** Verfahren nach einem der Ansprüche 1 bis 5, dadurch gekennzeichnet, daß das Extraktionsmittel aus einer Organophosphor-Verbindung der Formel (I) besteht, in der $R_1$, $R_2$ und $R_3$ gleiche lineare Alkylgruppen sind, sowie aus einer Organophosphor-Verbindung der Formel (I'), in der $R_4$, $R_5$ und $R_6$ gleiche lineare Alkylgruppen mit einer von $R_1$, $R_2$ und $R_3$ unterschiedlichen Anzahl Kohlenstoffatome sind.

**7.** Verfahren nach einem der Ansprüche 1 bis 5, dadurch gekennzeichnet, daß das Extraktionsmittel aus einer Organophosphor-Verbindung der Formel (I) besteht, in der $R_1$, $R_2$ und $R_3$ gleiche lineare Alkylgruppen sind, sowie aus einer Organophosphor-Verbindung der Formel (I'), in der $R_4$, $R_5$ und $R_6$ gleiche verzweigte Alkylgruppen oder unterschiedliche verzweigte Alkylgruppen oder lineare und verzweigte alkylgruppen sind.

**8.** Verfahren nach einem der Ansprüche 1 bis 7, dadurch gekennzeichnet, daß das Extraktionsmittel ein Gemisch aus Tri(n-hexyl)phosphinoxid und Tri(n-octyl)phosphinoxid oder ein Gemisch aus Bis(2,4,4-trimethylpentyl)n-octylphosphinoxid und Tri(2,4,4-trimethylpentyl)phosphin ist.

**9.** Verfahren nach einem der Ansprüche 1 bis 8, dadurch gekennzeichnet, daß die wäßrige Lösung der SE-nitrate eine Konzentration, angegeben als SE-oxide, von 20 bis 500 g/l aufweist.

**10.** Verfahren nach Anspruch 9, dadurch gekennzeichnet, daß die Konzentration an SE-nitraten 100 bis 500 g/l ausmacht.

**11.** Verfahren nach einem der Ansprüche 9 und 10, dadurch gekennzeichnet, daß die wäßrige Lösung der SE-nitrate eine Acidität im Bereich von 0,01n bis 3,0n aufweist.

**12.** Verfahren nach einem der Ansprüche 1 bis 11, dadurch gekennzeichnet, daß die organische Phase zusätzlich mindestens ein organisches Verdünnungsmittel enthält, das aus der Gruppe, bestehend aus den aliphatischen oder cycloaliphatischen Kohlenwasserstoffen, den Erdölfraktionen vom Typ Kerosin oder Isoparaffin, den aromatischen Kohlenwasserstoffen, den Erdölfraktionen, bestehend aus einem Gemisch von Alkylbenzolen, und den Halogenkohlenwasserstoffen, ausgewählt ist.

**13.** Verfahren nach Anspruch 1, dadurch gekennzeichnet, daß die Konzentration des Extraktionsmittels in der organischen Phase 5 bis 100 Vol.-% der organischen Phase ausmacht.

**14.** Verfahren nach Anspruch 13, dadurch gekennzeichnet, daß die Konzentration des Extraktionsmittels 50 bis 100% ausmacht.

**15.** Verfahren nach einem der Ansprüche 1 bis 14, dadurch gekennzeichnet, daß die organische Phase zusätzlich mindestens ein Modifiziermittel enthält, ausgewählt aus der Gruppe, bestehend aus den Verbindungen mit Alkoholfunktion und den Phosphorsäureestern.

**16.** Verfahren nach Anspruch 15, dadurch gekennzeichnet, daß die Konzentration des Modifiziermittels in der organischen Phase im Bereich von 3 bis 20 Vol.-% der organischen Phase liegt.

**17.** Verfahren nach einem der Ansprüche 1 bis 16, dadurch gekennzeichnet, daß die Konzentration an Nitrationen der wäßrigen Phase im verlauf der Extraktion zwischen 1 und 10 mol/l schwanken kann.

**18.** Verfahren nach Anspruch 17, dadurch gekennzeichnet, daß die Konzentration an Nitrationen im Bereich von 2 bis 9 mol/l liegt.

**19.** Verfahren nach einem der Ansprüche 1 bis 18, dadurch gekennzeichnet, daß die Extraktionstemperatur im Bereich von 10 bis 80 ° C liegt.

**20.** Verfahren nach einem der Ansprüche 1 bis 19, dadurch gekennzeichnet, daß man nach der Extraktionsstufe die organische Phase mit Wasser oder mit einer wäßrigen, Nitrationen enthaltenden Lösung wäscht.

**21.** Verfahren nach Anspruch 20, dadurch gekennzeichnet, daß die Waschlösung eine wäßrige Salpetersäurelösung mit einer Konzentration unterhalb 1n ist.

**22.** Verfahren nach Anspruch 21, dadurch gekennzeichnet, daß die Konzentration der wäßrigen Salpetersäurelösung zwischen $10^{-3}$ und $10^{-1}$n liegt.

**23.** Verfahren nach Anspruch 20, dadurch gekennzeichnet, daß die Waschlösung eine wäßrige Lösung von SE-nitraten ist, deren Konzentration, angegeben in SE-oxiden, 5 bis 500 g/l beträgt.

**24.** Verfahren nach Anspruch 23, dadurch gekennzeichnet, daß die Konzentration der wäßrigen Lösung von SE-nitraten 100 bis 500 g/l ausmacht.

**25.** Verfahren nach einem der Ansprüche 1 bis 24, dadurch gekennzeichnet, daß man nach den aufeinanderfolgenden Extraktions- und Waschstufen und anschließender Trennung der wäßrigen Phase von der organischen Phase in einer weiteren Stufe das Extraktionslösungsmittelregeneriert, indem man die organische Phase mit Wasser oder mit einer wäßrig-sauren Lösung zusammenbringt.

**26.** Verfahren nach Anspruch 25, dadurch gekennzeichnet, daß die wäßrig-saure Lösung eine wäßrige Lösung von Salpetersäure, Schwefelsäure, Chlorwasserstoffsäure oder Perchlorsäure ist.

**27.** Verfahren nach Anspruch 26, dadurch gekennzeichnet, daß die wäßrig-saure Lösung eine Salpetersäurelösung ist.

**28.** Verfahren nach einem der Ansprüche 26 und 27, dadurch gekennzeichnet, daß die Konzentration der wäßrig-sauren Lösung unterhalb 1n liegt.

**29.** Verfahren nach Anspruch 28, dadurch gekennzeichnet, daß die Konzentration der wäßrig-sauren Lösung zwischen $10^{-3}$ und $10^{-1}$n liegt.

**30.** Verfahren nach einem der Ansprüche 1 bis 29, dadurch gekennzeichnet, daß man in einer ersten Stufe, um mindestens zwei Seltene Erden oder zwei Untergruppen von Seltenen Erden zu trennen, die wäßrige Lösung von SE-nitraten mit einer organischen Phase zusammenbringt, die aus einem Verdünnungsmittel und dem Extraktionsmittel besteht, so, daß in die organische Phase die Seltene Erde oder die Untergruppe von Seltenen Erden extrahiert wird, die den höchsten Verteilungskoeffizienten besitzt, während die andere Seltene Erde oder Untergruppe von Seltenen Erden im wesentlichen in der wäßrigen Phase verbleibt, daß man in einer zweiten Stufe die organische Phase selektiv mit einer wäßrigen Lösung, die Nitrationen enthält, wäscht, um die geringe Menge an Seltener Erde oder Untergruppe von Seltenen Erden, die am wenigsten in die organische Phase extrahiert worden sind, durch Übergang in die wäßrige Phase zu entfernen, daß man anschließend die organische Phase von der wäßrigen Phase trennt und daß man in einer dritten Stufe das Extraktionslösungsmittel regeneriert, indem man die organische Phase mit Wasser oder mit einer wäßrig-sauren Lösung zusammenbringt.

**31.** Verfahren nach Anspruch 30, dadurch gekennzeichnet, daß man Yttrium von Yttererden trennt.

**32.** Verfahren nach Anspruch 31, dadurch gekennzeichnet, daß das Yttrium, angegeben als Oxid, 5 bis 80% des Gesamtgewichtes der Yttererden, die getrennt werden sollen, angegeben als Oxide, ausmacht.

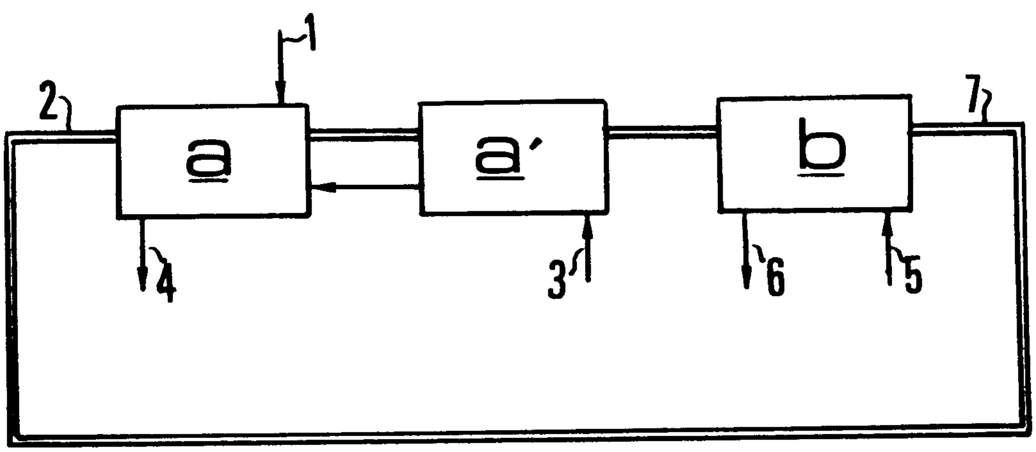


FIG. 1